(19) Europäisches Patentamt
European Patent Office
Office européen des brevets

(11) **EP 0 590 279 B1**

(12) **EUROPÄISCHE PATENTSCHRIFT**

(45) Veröffentlichungstag und Bekanntmachung des Hinweises auf die Patenterteilung:
**11.12.1996  Patentblatt 1996/50**

(51) Int Cl.[6]: **G01M 3/24**

(21) Anmeldenummer: **93112652.8**

(22) Anmeldetag: **06.08.1993**

(54) **Verfahren und Einrichtung zur Ultraschall-Leckage-Ortung**

Ultrasonic procedure and device for locating leaks

Procédé et dispositif ultrasonique de localisation de fuites

(84) Benannte Vertragsstaaten:
**BE CH DE ES FR GB LI NL SE**

(30) Priorität: **19.08.1992  DE 4227458**

(43) Veröffentlichungstag der Anmeldung:
**06.04.1994  Patentblatt 1994/14**

(73) Patentinhaber: **SIEMENS AKTIENGESELLSCHAFT**
**80333 München (DE)**

(72) Erfinder:
• **Kunze, Ulrich, Dr.**
  **D-91054 Erlangen (DE)**
• **Knoblach, Walter, Dr.**
  **D-91058 Erlangen (DE)**
• **Schulze, Günther, Dr.**
  **D-90768 Fürth (DE)**

(56) Entgegenhaltungen:
**EP-A- 0 140 174**          **FR-A- 2 503 363**

• **VGB KRAFTWERKSTECHNIK, Bd. 72, Nr. 6, Juni 1992, Essen DE, Seiten 514-517; P. JAX et al.: "Neue Leck-Detektions- und Ortungsverfahren für Rohrleitungen und Behälter"**
• **DATABASE INSPEC Nr. E007-7616-Y, 1976; J.R. SABO : "Detect buried steam leaks with acoustics"; & ELECTRICAL WORLD, Bd. 186, Nr. 1, 1. Juli 1976, Seite 40.**

**Beschreibung**

Die Erfindung bezieht sich auf ein Verfahren zur Ultraschall-Leckage-Ortung, bei dem die an verschiedenen Orten entlang einer Meßstrecke gemessenen Schallpegel in einem Balkendiagramm dargestellt werden und bei dem der Schnittpunkt zweier Geraden in diesem Balkendiagramm zur Kennzeichnung des Leckage-Ortes ermittelt wird. Die Erfindung bezieht sich weiterhin auf eine Einrichtung zur Durchführung dieses Verfahrens.

Ein Verfahren und eine Einrichtung der eingangs genannten Art sind aus der EP-C-0 140 174, insbesondere Figur 5, und aus dem Prospekt "ALÜS Akustisches Leck-Überwachungssystem", Bestell-Nr. A19100-U653-A212, April 1990, der Siemens AG, Bereich Energieerzeugung, D-8520 Erlangen, bekannt.

Das hier betrachtete Verfahren zur akustischen Leckage-Überwachung basiert auf der Tatsache, daß durch ein Leck ausströmende und sich entspannende Flüssigkeiten, Dämpfe oder Gase Körperschall erzeugen. Diese Geräusche breiten sich in den betroffenen Komponenten (z. B. Rohrleitungen, Behältern, Pumpen, Ventilen) aus und werden von Schallwandlern oder Schallaufnehmern gemessen. Letztere sind an der Oberfläche der überwachten Komponenten in gewissen Abständen angebracht.

Als Meßgröße wird dabei der Effektiv- oder RMS-Wert der hochfrequenten Schallwandler-Signale benutzt. Während des Normalbetriebes verursachen die Strömungsgeräusche einen Untergrund-Signalpegel $E_O$. Das plötzliche Auftreten eines Lecks erzeugt einen Leckage-Geräuschpegel $E_L$ am Ort $x_i$ des Schallwandlers ($i = 1, 2, ...$), dessen Höhe von der Größe der Leckage und ihrer Entfernung vom Schallwandler abhängt. Der Gesamtgeräuschpegel $E_{L,O}$ am Ort $x_i$ eines Wandlers entsteht durch eine Überlagerung des Leckage-Geräusches und des Betriebs-Geräusches nach folgender Formel:

$$E_{L,O} = ( E_O^2 + E_L^2 )^{0,5}. \qquad (1)$$

Das bedeutet, daß eine Leckage, die am Ort $x_i$ des Schallaufnehmers den gleichen Geräuschpegel wie das Betriebsgeräusch erzeugt, den Gesamtgeräuschpegel um etwa 40 % erhöht; das ist ein Anstieg, der gut meßbar ist.

Für die Ortung des Lecks ist zunächst für jeden Meßort $x_i$ aus den gemessenen Schallpegeln der Aufnehmer der Anteil zu bestimmen, der durch das Leckgeräusch bestimmt wird. Das geschieht bekanntermaßen durch Subtraktion des Untergrundgeräusches $E_O^2$ der Anlage gemäß

$$E_L^2 = E_{L,O}^2 - E_O^2. \qquad (2)$$

Die Netto-Schallpegel $E_L^2$ an den i verschiedenen Orten $x_i$ entlang der Meßstrecke werden logarithmisch in einem Balkendiagramm dargestellt, und - sofern eine Leckage vorliegt-der Schnittpunkt zweier dann vorhandener Geraden wird zur Kennzeichnung des Leckage-Ortes $x_L$ herangezogen.

Mit anderen Worten: Bei dem hier betrachteten Verfahren wird mit mehreren fest installierten Aufnehmern im Ultraschallbereich der Betriebs-Schallpegel (RMS-Wert) auf anomale Veränderungen überwacht. Der Frequenzbereich ist so gewählt, daß die über dem Betriebs-Schallpegel liegenden hochfrequenten Anteile des Leckgeräusches erfaßt werden, und daß die niederfrequenten, mechanisch angeregten Schallwellen jedoch ausgefiltert werden. Im Normalbetrieb sind die RMS-Werte der einzelnen Aufnehmer weitgehend konstant; Leckagen dagegen verursachen einen Anstieg der Werte. Gemäß dem bekannten Verfahren wird hieraus für jeden Aufnehmer der ausschließlich auf die Leckage zurückgehende Anteil bestimmt; er nimmt mit zunehmendem Abstand vom Leck gesetzmäßig ab.

Wie bereits erwähnt, wird dieser Anteil logarithmisch als Funktion der einzelnen Aufnehmerorte $x_i$ in Form eines Balkendiagramms dargestellt. Längere oder sich verzweigende Rohrleitungen werden in Überwachungs-Abschnitte aufgeteilt, und für jeden Abschnitt wird ein solches Balkendiagramm erstellt.

Das bisherige Ortungsverfahren setzt eine konstante Schalldämpfung entlang der jeweiligen Meßstrecke voraus. Lokale Unterschiede werden durch eine spezielle Kalibrierung beim Beginn des Einsatzes des Verfahrens an einer Anlage rechnerisch ausgeglichen. Die Praxis zeigt jedoch, daß bei Anwendung des Verfahrens z. B. im Primärkreis eines Kernkraftwerkes sehr große Differenzen der Dämpfungskoeffizienten zwischen den Rohrleitungen und einzelnen Komponenten der Anlage (Flansche, Pumpen, Dampferzeuger, usw.) auftreten. Diese Unterschiede der Dämpfungskoeffizienten können untereinander einen Faktor von 10 und mehr betragen. Folglich wird bei der Ortung mit einem gemittelten und damit lokal falschen Dämpfungskoeffizienten gearbeitet, was zwangsläufig zu einer fehlerhaften Ortung der Leckstelle führt. Eine fehlerhafte Ortung ergibt sich insbesondere dann, wenn in der Nähe dieser Leckstelle eine große Dämpfungsänderung über eine kurze Wegstrecke zu verzeichnen ist.

Aufgabe der Erfindung ist es, das eingangs genannte Verfahren dahingehend zu verbessern, daß eine genauere Leckage-Ortung möglich ist. Weiterhin soll eine Einrichtung zur Durchführung dieses Verfahrens angegeben werden.

Die Lösung der Aufgabe bezüglich des Verfahrens ist erfindungsgemäß durch die Merkmale des Anspruches 1 gekennzeichnet.

Die Einrichtung zur Durchführung des Verfahrens ist durch die Merkmale des Anspruches 3 gekennzeichnet.

Die Erfindung basiert somit auf der Überlegung, daß es zweckmäßig ist, eine "effektive Geometrie" einzuführen. Diese "effektive Geometrie" dient der Berücksichtigung der tatsächlich lokal unterschiedlichen Schalldämpfungen. Eine zu überwachende Anlage oder Komponente besteht aus nacheinander angeordneten Teilstücken und Rohrleitungen, die jeweils voneinander verschiedene Schalldämpfungskoeffizienten besitzen. In der Praxis sind diese unterschiedlichen Schalldämpfungskoeffizienten bekannt oder zumindest experimentell ermittelbar.

Ausführungsbeispiele der Erfindung werden im folgenden anhand von zwei Figuren näher erläutert. Es zeigen:

Figur 1 ein Balkendiagramm zur Verdeutlichung der Problemstellung, in dem die logarithmierten RMS-Werte verschiedener Sensoren entlang einer Überwachungsstrecke in Abhängigkeit von den einzelnen Meßpositionen $x_i$ dargestellt sind; und

Figur 2 ein Balkendiagramm, bei dem die genannten RMS-Werte über effektiven Ortskoordinaten $X_i$ dargestellt sind.

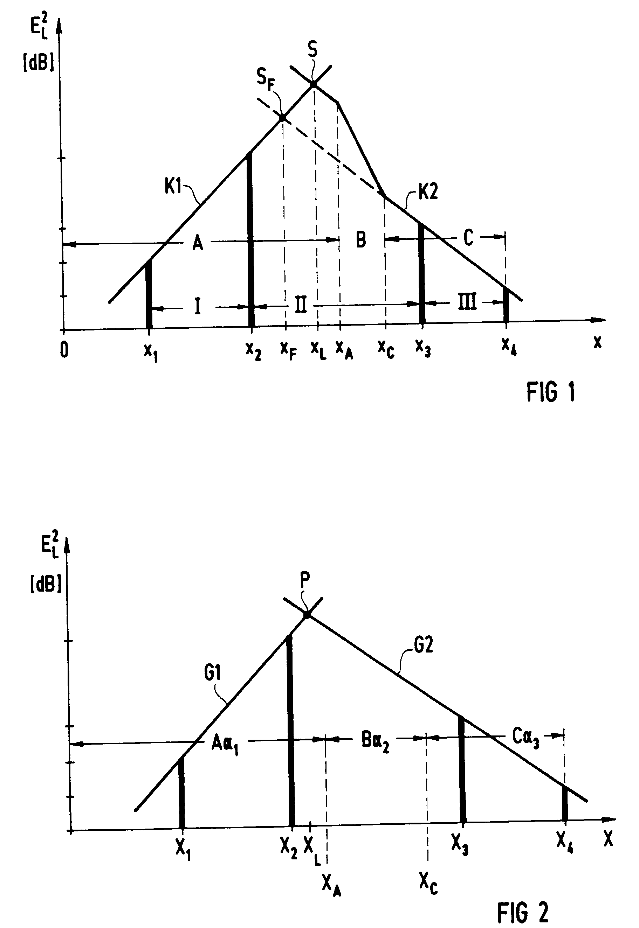

Bei Figur 1 ist der Einfachheit halber davon ausgegangen, daß Ultraschall-Aufnehmer entlang einer Überwachungsstrecke auf einer druckführenden Anlage (z. B. Primärkreis eines Kernkraftwerkes) an nur vier Meßpositionen oder Meßstellen $x_1$, $x_2$, $x_3$ und $x_4$ angebracht sind. Die Überwachungs- oder Meßstrecke, die von 0 bis $x_4$ reicht, ist dadurch in Abschnitte I, II und III unterteilt. In der Praxis werden aber z. B. 30 bis 40 solcher Meßpositionen überwacht. Vorliegend sind die logarithmierten Schallpegel $E_L^2$ an jeder Meßposition $x_i$ in Form eines Balkens eingetragen. Würde man eine Vielzahl eng benachbarter Sensoren einsetzen, würde man zwei gegenläufige Kurven K1 und K2 erhalten, die sich im Punkt S am tatsächlichen Leckort $x_L$ schneiden. Die Kurve K1 ist dabei eine Gerade. Und die Kurve K2 ist eine Knickkurve; dabei ist nämlich angenommen, daß im Verlauf des Weges zwischen den Meßpositionen $x_2$ und $x_3$ eine Teilstrecke oder ein Abschnitt B mit einer einheitlich großen Dämpfung $\alpha_2$ vorhanden ist. In den beiden Abschnitten A und C herrscht dagegen jeweils einheitlich die demgegenüber geringere Dämpfung $\alpha_1$ bzw. $\alpha_3$. Die Meßpositionen $x_1$ und $x_2$ liegen im Abschnitt A, und die Meßpositionen $x_3$ und $x_4$ liegen im Abschnitt C. Die Grenzen des Abschnitts B sind mit $x_A$ und $x_C$ bezeichnet. In einem praktischen Fall würde man eine Vielzahl von Abschnitten A, B, ... unterschiedlicher Dämpfungskoeffizienten $\alpha_1$, $\alpha_2$ ... vorfinden.

Im herkömmlichen Verfahren zur Ultraschall-Leckage-Ortung legt man bekanntermaßen durch die vorhanden Endpunkte der einzelnen Balken an den Meßpositionen $x_i$ Ausgleichsgeraden entgegengesetzter Neigung. Dies ist an den Meßpositionen $x_1$ und $x_2$ auch ohne weiteres möglich. Man erhält die Gerade K1. Man kann eine Gerade auch durch die Balkenenden an den Meßpositionen $x_3$ und $x_4$ legen. Das ist gestrichelt eingezeichnet. Dann erhält man allerdings einen Schnittpunkt $S_F$ mit der Geraden K1, der zu einem falschen Leckort $x_F$ führt. Der Abstand zwischen dem tatsächlichen Leckort $x_L$ und dem fälschlich ermittelten Leckort $x_F$ kann beträchtlich sein. Denn dieser Schnittpunkt $S_F$ könnte auch - anstelle im Abschnitt II - im links daneben gelegenen Abschnitt I liegen.

Ein solcher Fehler tritt in der Praxis gelegentlich tatsächlich auf; er soll durch die vorliegende Erfindung weitgehend eliminiert werden. Wie dieses geschieht, ist dem Prinzip nach in Figur 2 dargestellt. Das Verfahren hat sich insbesondere in dem Fall bewährt, in dem sich schalldämpfende Komponenten im Bereich zwischen zwei Sensoren befinden, insbesondere auch dann, wenn diese schalldämpfenden Komponenten in der Nähe des Lecks liegen.

Gemäß der vorliegenden Erfindung wird die Meß- oder Überwachungsstrecke, die von 0 bis $x_4$ reicht, unterteilt in Abschnitte oder Teilstrecken A, B, C (vergl. Fig. 1), von denen jeder in sich eine einheitliche Dämpfung und damit einen bestimmten Schalldämpfungskoeffizienten $\alpha_1$, $\alpha_2$ bzw. $\alpha_3$ besitzt. Jeder dieser Teilstrecken A, B, C wird nun gemäß Fig. 2 ein effektives Teilstück auf einer effektiven Ortskoordinaten-Achse X zugeordnet. Die effektiven Teilstücke $\alpha_1 A$, $\alpha_2 B$, $\alpha_3 C$ ergeben sich jeweils durch Multiplikation der Teilstücke A, B, C mit dem zugehörigen Dämpfungskoeffizienten $\alpha_1$, $\alpha_2$ bzw. $\alpha_3$. Sie werden betragsgerecht entlang der Achse X aufgetragen.

Sodann werden die effektiven Ortskoordinaten oder effektiven Meßpositionen $x_1$, $x_2$, $x_3$ und $x_4$ ermittelt. Diese effektiven Ortskoordinaten $x_1$ ... $x_4$ ergeben sich aus den Ortskoordinaten $x_1$ ... $x_4$ der Meßstellen durch Berücksichtigung des jeweiligen Dämpfungskoeffizienten. Im Abschnitt A gilt somit allgemein: $X = \alpha_1 \cdot x$.
Im Abschnitt B gilt: $X = X_A + \alpha_2 \cdot (X - X_A)$; und im Abschnitt C gilt: $X = X_C + \alpha_3 \cdot (x - x_C)$.

Die effektiven Ortskoordinaten $x_1$, $x_2$, $x_3$ und $x_4$ für die vier Ultraschall-Sensoren sind in Fig. 2 eingetragen.

Nun wird ein Balkendiagramm erstellt. Dazu wird über den effektiven Ortskoordinaten $x_1$, $x_2$, $x_3$ und $x_4$ jeweils der gemessene Netto-Schallpegel $E_L^2$ (in dB) logarithmisch aufgetragen.

Durch die Endpunkte der Balken können sodann zwei gegeneinander geneigte Ausgleichsgeraden G1 und G2 gezogen werden. Der Schnittpunkt P dieser beiden Geraden G1 und G2 wird ermittelt. Seine effektive Ortskoordinate $X_L$ kennzeichnet die wahre Leckstelle $x_L$. Letztere wird durch Rückrechnung gemäß $x_L = x_L / \alpha_1$ ermittelt.

Diese Rechnungen werden zweckmäßigerweise mit einem Rechner durchgeführt. Der Leckort $x_L$ kann nun angezeigt werden, z. B. auf einem Bildschirm oder auf dem Ausdruck eines Schreibers.

## Patentansprüche

1. Verfahren zur Ultraschall-Leckage-Ortung, bei dem die Schallpegel an verschiedenen Orten entlang einer Meßstrecke in einem Balkendiagramm dargestellt werden und bei dem der Schnittpunkt zweier Geraden in diesem Balkendiagramm zur Kennzeichnung des Leckage-Ortes ermittelt wird, **dadurch gekennzeichnet,**

a) daß die Meßstrecke (0 - $x_4$) unterteilt wird in Teilstrecken (A, B, C) in sich einheitlicher Dämpfung ($\alpha_1$, $\alpha_2$, $\alpha_3$) für die Schallsignale,
b) daß jeder dieser Teilstrecken (A, B, C) ein effektives Teilstück ($\alpha_1$A, $\alpha_2$B, $\alpha_3$C) zugeordnet wird, das sich durch Multiplikation der Länge der Teilstrecke (A, B, C) mit dem zugehörigen Dämpfungskoeffizienten ($\alpha_1$, $\alpha_2$, $\alpha_3$) ergibt,
c) daß innerhalb der effektiven Teilstücke ($\alpha_1$A, $\alpha_2$B, $\alpha_3$C) für die Meßorte ($x_1$, $x_2$, ... ) entsprechende effektive Meßpositionen ($X_1$, $X_2$, ...) durch Multiplikation des Abstandes vom Beginn der jeweiligen Teilstrecke mit dem zugehörigen Dämpfungskoeffiziensen ermittelt werden,
d) daß über den so ermittelten effektiven Meßorten ($X_1$, $X_2$, ...) jeweils in bekannter Weise der logarithmierte Netto-Schallpegel ($E_1^2$) aufgetragen wird, wodurch sich die zwei geneigten Geraden (G1, G2) ergeben,
e) daß der Schnittpunkt (P) dieser Geraden (G1, G2) zur Kennzeichnung der effektiven Ortskoordinate ($X_L$) der Leckstelle ermittelt wird, und
f) daß aus der effektiven Ortskoordinate ($X_L$) der Leckstelle durch Rückrechnung unter Berücksichtigung der Dämpfungswerte ($\alpha_1$, ...) die wahre Leckstelle ($X_L$) ermittelt wird.

2. Verfahren nach Anspruch 1, **dadurch gekennzeichnet,** daß der Leckort ($x_L$) angezeigt wird, z. B. auf einem Bildschirm oder einem Ausdruck eines Schreibers.

3. Einrichtung zur Durchführung des Verfahrens nach einem der Ansprüche 1 bis 2 mit einer Anzahl von Ultraschall-Aufnehmern entlang einer Meßstrecke, deren Ausgänge über Verstärker und eine den Effektivwert der Schallsignale bildende Komponente mit einer Datenverarbeitungsanlage in Verbindung stehen, **dadurch gekennzeichnet,** daß als Datenverarbeitungsanlage ein Rechner vorgesehen ist, der so ausgebildet ist, daß unter Berücksichtigung der Dämpfung ($\alpha_1$, $\alpha_2$, $\alpha_3$) entlang der Meßstrecke (0 bis $x_4$) aus den Meßorten ($x_1$, $x_2$, ...) effektive Meßpositionen ($X_1$, $X_2$, ...) bestimmt werden, über diesen effektiven Meßpositionen die logarithmierten Effektivwerte ($E_L^2$) im einem Balkendiagramm

aufgetragen werden und sodann in das Balkendiagramm zwei Geraden (G1, G2) unterschiedlicher Neigung eingeschrieben werden, deren Schnittpunkt (P) zur Charakterisierung der tatsächlichen Leckstelle ($x_L$) bestimmt wird.

## Claims

1. Method for ultrasonic leak location, in which the sound levels at various locations along a measurement segment are represented in a bar diagram, and in which the intersection of two straight lines in this bar diagram is ascertained in order to identify the location of the leakage, **characterised in that**

a) the measuring segment (0 - $x_4$) is divided into partial segments (A, B, C) having intrinsically uniform damping ($\alpha_1$, $\alpha_2$, $\alpha_3$) for the sound signals,
b) each of these partial segments (A, B, C) is assigned an effective portion ($\alpha_1$A, $\alpha_2$B, $\alpha_3$C) which is obtained by the multiplication of the length of the partial segment (A, B, C) by the associated damping coefficient ($\alpha_1$, $\alpha_2$, $\alpha_3$),
c) within the effective portions ($\alpha_1$A, $\alpha_2$B, $\alpha_3$C), corresponding effective measuring positions ($X_1$, $X_2$, ...) are ascertained for the measuring locations ($x_1$, $x_2$, ...) by multiplication of the distance from the start of the respective partial segment by the associated damping coefficient,
d) the respective logarithmised net sound level ($E_L^2$) is plotted in a known manner by way of the effective measuring locations ($X_1$, $X_2$, ...) ascertained in this way, producing the two inclined straight lines (G1, G2) as a result,
e) the intersection (P) of these straight lines (G1, G2) is ascertained for identifying the effective location coordinates ($X_L$) of the leak point, and
f) the true leak point ($x_L$) is ascertained from the effective location coordinate ($X_L$) of the leak point by reverse calculation, taking the damping values ($\alpha_1$, $\alpha_2$ ...) into account.

2. Method according to claim 1, **characterised in that** the leak location ($x_L$) is displayed, for example on a screen or on a print-out of a plotter.

3. Device for carrying out the method according to one of claims 1 to 2, having a number of ultrasonic pick-ups along a measuring segment, the outputs of which pick-ups are connected to a data processing system by way of amplifiers and by way of a component forming the effective value of the sound signals, **characterised in that** a computer is provided as the data processing system, which computer is formed in such a way that effective measuring positions ($X_1$, $X_2$, ...) are ascertained from the measuring locations ($x_1$, $x_2$, ...) by taking into account the damping ($\alpha_1$, $\alpha_2$, $\alpha_3$) along the measuring segment (0 to $x_4$), and, by way of these effective measuring positions, the logarithmised effective values ($E_L^2$) are plotted in a bar diagram and two straight lines (G1, G2) of different slope are drawn on to the bar diagram, the intersection (P) of these straight lines being ascertained in order to identify the actual leak point ($x_L$).

**Revendications**

1. Procédé de localisation de fuite par ultrason, dans lequel les niveaux sonores, mesurés en divers endroits sur un trajet de mesure, sont représentés dans un diagramme en barres et dans lequel l'intersection de deux droites de ce diagramme en barres est déterminée pour caractériser le lieu de la fuite, caractérisé en ce que

a) on subdivise le trajet de mesure (0 à $x_4$) en trajets (A, B, C) partiels d'atténuation ($\alpha_1$, $\alpha_2$, $\alpha_3$) en soi unitaire des signaux acoustiques,
b) il est associé à chacun de ces trajets (A, B, C) partiels un élément ($\alpha_1 A$, $\alpha_2 B$, $\alpha_3 C$) partiel réel que l'on obtient en multipliant la longueur des trajets (A, B, C) partiels par les coefficients ($\alpha_1$, $\alpha_2$, $\alpha_3$) d'atténuation associés,
c) on détermine à l'intérieur des éléments ($\alpha_1 A$, $\alpha_2 B$, $\alpha_3 C$) partiels réels, pour les lieux ($x_1$, $x_2$, ...) de mesure, des positions ($X_1$, $X_2$, ...) de mesure réelles correspondantes, en multipliant la distance du début du trajet partiel associé par le coefficient d'atténuation associé,
c) on porte en fonction des lieux ($X_1$, $X_2$ ...) de mesure réels ainsi déterminés, de manière connue, les niveaux ($E_L^2$) sonores nets logarithmiques, ce qui donne les deux droites (G1, G2) inclinées,
e) on détermine l'intersection (P) de ces deux droites (G1, G2) pour caractériser la coordonnée ($X_L$) réelle de lieu du point de fuite, et
f) on détermine par calcul à partir de la coordonnée ($X_L$) réelle de lieu du point de fuite le point ($x_L$) véritable de fuite par $x_L = X_L / \alpha_1$.

2. Procédé suivant la revendication 1, caractérisé en ce que le lieu ($x_L$) de fuite est indiqué sur un écran ou sur une sortie d'un traceur.

3. Dispositif de mise en oeuvre du procédé suivant une des revendications 1 à 2, comportant un certain nombre de capteurs d'ultrason qui sont disposés sur un trajet de mesure et dont les sorties sont en liaison, par l'intermédiaire d'amplificateurs et d'un composant formant la valeur réelle des signaux sonores, avec une installation de traitement de données, caractérisé en ce qu'il est prévu, comme installation de traitement de données, un ordinateur qui est tel que, en tenant compte de l'atténuation ($\alpha_1$, $\alpha_2$, $\alpha_3$) sur le trajet de mesure (0 à $x_4$), il est déterminé, à partir des lieux ($x_1$, $x_2$ ...) de mesure, des positions ($X_1$, $X_2$, ...) de mesure réelles, qu'il est porté dans un diagramme en barres, en fonction de ces positions de mesure réelles, des valeurs ($E_L^2$) logarithmiques réelles et qu'il est ensuite tracé dans le diagramme en barres deux droites (G1, G2) de pente différente dont l'intersection (P) est déterminée pour caractériser le point ($x_L$) réel de fuite.

FIG 1

FIG 2